# EUROPEAN PATENT SPECIFICATION

(11) **EP 3 644 139 B1**
(45) Date of publication and mention of the grant of the patent: **09.08.2023**
(21) Application number: 19194039.4
(22) Date of filing: 28.08.2019
(51) Int. Cl.: G06N 5/022, G06N 7/01, G06N 20/20, G05B 13/04, G06N 5/02

(54) **SYSTEM AND METHOD FOR INVERSE INFERENCE FOR A MANUFACTURING PROCESS CHAIN**
SYSTEM UND VERFAHREN ZUR INVERSEN INFERENZ FÜR EINE HERSTELLUNGSPROZESSKETTE
SYSTÈME ET PROCÉDÉ D'INFÉRENCE INVERSE POUR UNE CHAÎNE DE PROCESSUS DE FABRICATION

(30) Priority: 26.10.2018 IN 201821040561
(43) Date of publication of application: 29.04.2020
(73) Proprietor: Tata Consultancy Services Limited, Maharashtra (IN)
(72) Inventor: SARDESHMUKH, Avadhut Mohanrao, 411013 Maharashtra (IN); SHAH, Sapankumar Hiteshchandra, 411013 Pune, Maharashtra (IN); REDDY, Sreedhar Sannareddy, 411013 Maharastra, Pune (IN); BASAVARSU, Purushottham Gautham, 411 013 Pune, Maharashtra (IN)
(74) Representative: Goddar, Heinz J.

(56) References cited:
- WO-A1-2014/087427
- Z LIU ET AL: "Manufacturing Process Flow Reasoning of Micro Device Based on Ontology", APPLIED MECHANICS AND MATERIALS, vol. 10-12, 6 December 2007 (2007-12-06), pages 248-252, XP055115353, Switzerland DOI: 10.4028/www.scientific.net/AMM.10-12.248

## Description

### CROSS-REFERENCE TO RELATED APPLICATIONS AND PRIORITY

The present application claims priority from Indian non-provisional specification no. 201821040561, filed on October 26, 2018.

### TECHNICAL FIELD

The disclosure herein generally relates to the field of integrated computation materials engineering, and, more particularly, but not specifically, a system and method for predicting configuration of a manufacturing process chain for a desired output.

### BACKGROUND

Integrated Computational Materials Engineering (ICME) is a new approach to the design and development of materials, manufacturing processes and products. It proposes using a combination of physics based simulations, data driven reasoning and guided experiments to speed up the development of new materials and manufacturing processes by integrating material design with product design.

A large design space consisting of combinations of material compositions, processes and their parameters needs to be explored. An important problem in this context is to model the relationships between a material's structure, processes and properties. Specifically, prediction of outputs/properties given the processing parameters (forward prediction problem) and prediction of inputs/process parameters required to achieve desired outputs/properties (inverse prediction problem) are problems which need to be addressed.

An alternative is to use fast and approximate data-driven models learnt from data generated from carefully designed limited number of expensive simulations. Hence, inverse prediction model is useful in problems with large design spaces, for narrowing down the design space so that expensive simulations and experiments could be used to explore the narrowed down design space.

WO 2014/087427 A1 describes a method for computational design and modeling and a system implementing this method. According to this method requirements and desired properties of a product being developed are identified by a processor. Based on the result, one or more processes and materials suitable for developing the product are determined using a materials ontology, a product and process ontology instance, material knowledge elements, and product and process knowledge elements. Based thereon, processing of a material is simulated for developing a simulated product using simulation tools. The processor ascertains whether the simulated product meets the requirements and the desired properties. A knowledge base having knowledge and ontology instances corresponding to the material, the process, and the simulation tool are updated based on the assertion for being used for design and modeling of the product and similar products.

### SUMMARY OF THE INVETION

The present disclosure presents technological improvements as solutions to one or more of the above-mentioned technical problems recognized by the inventors in conventional systems. In order to predict a configuration of a manufacturing process for desired properties of a product, a system according to claim 1 and a method according to claim 5 are provided. Specific embodiments are defined in the dependent claims.

In an exemplary embodiment, the generated composite model is sampled using a Monte Carlo simulation to infer configuration for desired properties of a product to be manufactured.

It is to be understood that the following detailed description is exemplary and explanatory only and not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary system to predict a configuration of a manufacturing process for desired properties of a product, according to some embodiments of the present disclosure;
FIG. 2 is a schematic diagram, as an example, to describe a gear design manufacturing process according to an embodiments of the present disclosure; and
FIG. 3(a) & 3(b) is a flow diagram to illustrate a method to predict a configuration of a chain of a manufacturing process for desired properties of a product in accordance with some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the spirit and scope of the disclosed embodiments. It is intended that the following detailed description be considered as exemplary only, with the true scope being indicated by the following claims.

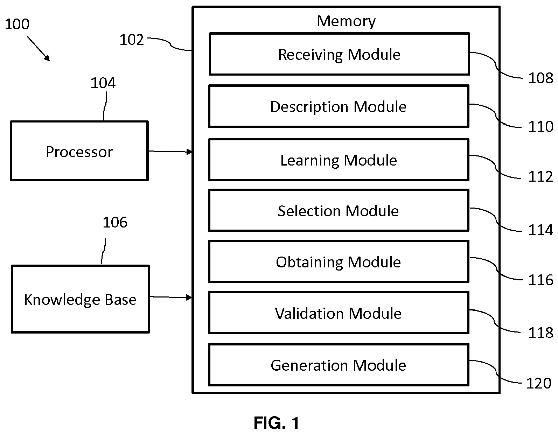

Referring now to the drawings, and more particularly to FIG. 1 through 3, where similar reference characters denote corresponding features consistently throughout the figures, there are shown preferred embodiments and these embodiments are described in the context of the following exemplary system and/or method.

Referring FIG. 1, a system (100) to predict a configuration of a manufacturing process for desired properties of a product is provided. Further herein, the system is configured for an inverse inference of a chain of manufacturing process to predict the configuration of the chain of the manufacturing processes for the desired properties of the product. A variant of the conditional Linear Gaussian Bayesian network to be used. As all the variables (process parameters and properties) being modeled are continuous variables, a Bayesian network variant that supports continuous distributions is needed. Further, the system comprises a model capable of representing non-linear relationships by learning piecewise linear approximations.

In the preferred embodiment, the system (100) comprises at least one memory (102) with a plurality of instructions and one or more hardware processors (104) which are communicatively coupled with the at least one memory (102) to execute modules therein. The system comprises a knowledge base (106), a receiving module (108), a description module (110), a learning module (112), a selection module (114), an obtaining module (116), a validation module (118), and a generation module (120).

The knowledge base (106) of the system is associated with the one or more hardware processors (104). The knowledge base (106) includes data utilized for the functioning of the system (100). It will be understood that although the knowledge base (106) has been shown external to the system (100), however, the knowledge base (106) may be located within the system (100).

In one aspect, the knowledge base (106) includes the data, such as knowledge elements in the form of ontology instances of a plurality of ontologies. Further, the knowledge base (106) may include material knowledge elements, product and process knowledge elements, and models knowledge elements organized as rules, cases, equation, models and so on, all expressed in terms of the common vocabulary provided by an ontology. In another implementation, a specification mechanism may be provided to compose knowledge elements spanning multiple knowledge representation mechanisms, such as rules, cases, equations, models and so on, and using domain ontology as a means to integrate reasoning across these mechanisms.

In the preferred embodiment, the receiving module (108) of the system (100) is configured to receive a description of a plurality of unit manufacturing processes of the manufacturing process and a set of desired output properties from the manufacturing process. It is to be noted that the chronological order of the plurality unit manufacturing processes must be defined in the received description to achieve the set of desired output properties from the manufacturing process.

It would be appreciated that selection of materials for product manufacturing plays a pivotal role in the process of developing a new product. The chemistry and internal structure of materials have significant effect on various properties, such as strength of the product. Thus, selecting or designing a suitable material for the product required careful attention. Further, apart from selecting and/or designing the material, processing of the material may result in variation in properties of the material. For instance, same material when heated at different temperatures may attain different properties, such as strength, impact resistance, fatigue life, and surface texture. Thus, developing a new product may become a time consuming and cost intensive due to designing of the new material and their processing techniques as such designing involves various experiments and trials. Hence, the system(s) and method(s) are based on domain knowledge of materials, processing techniques, i.e., material manufacturing and processing methods, internal structure of material, material properties, and products developed using the material.

In the preferred embodiment, the description module (110) of the system (100) is configured to create an ontological description of the plurality of unit manufacturing processes and its one or more parameters from the received description of the plurality of unit manufacturing processes.

An ontology defines a common vocabulary for users who share information within a domain. The domain may be understood as a field of knowledge, for example, materials and process may be the domain in the present case of material and process designing. The ontologies are typically defined using various ontology instances which includes machine interpretable and human readable definitions of basic concepts of the domain and the relations among these basic concepts.

In one aspect, the domain knowledge is organized in the form of knowledge elements, interchangeably referred to as knowledge, and ontologies stored in knowledge database, interchangeably referred as knowledge base. Providing the ontologies helps in ensuring that all data, such as properties and parameters related to materials and process are available directly. Further, capturing associations between various entities, such as the materials and the processes, and the material properties and the internal structure of material helps in identifying suitable materials and process for developing a product. Additionally, such associations may further help in designing new materials and processes. Further, combining the ontology based knowledge database, simulation models, online databases, and the system for real time processing and updating of the knowledge base helps in providing an integrated framework for the manufacturing process.

In another aspect, knowledge corresponding to material, product and process, and simulation models may be organized as rules, cases, equation, models and so on, expressed in terms of the common vocabulary provided by the ontology. Further, a specification mechanism may be provided to compose knowledge elements spanning multiple knowledge representation mechanisms, such as rules, cases, equations, models and so on, and using domain ontology as a means to integrate reasoning across these mechanisms. As will be understood, ontology refers to a common vocabulary for people who need to share information within a domain. The ontology contains machine-interpretable and human readable definitions, called ontology instances, of basic concepts of the domain and the relations among these basic concepts. The ontology instances, in one example, may be created using a resource description framework (RDF)-web ontology language (OWL) schema. In one example, three types of ontologies, namely, material ontology, product and process ontologies, model ontology and the relationships between these ontologies are used.

Material ontology describes the concepts related to the internal structure, composition, form and properties of a material. Materials may be understood as different materials, such as steel, aluminum, wood, plastic, that may be used for manufacturing a product and may be further classified into form of material, such as bar, sheet, powder, pellets, and billet and state of material, such as solid, liquid, and gaseous. Material properties may be understood as properties of the materials, such as strength and corrosion resistance and may be further classified into mechanical, physical, thermal, chemical, electrical, biological, etc. Internal structure of the material may include, for example, bulk phases, such as Ferrite, Martensite, Austenite, Cementite, Pearlite, and Bainite inclusions; dislocations; and precipitates in the case of steels. Each of these bulk phases may have attributes, such as sub-phases, phase composition, phase percentage, and phase distribution and may be associated with morphology, such as lath and plate, atomic arrangement, such as crystalline and amorphous. The material ontology instance further captures relationships between the materials, the internal structure of material, and the material properties.

For instance, it may capture what all properties and internal structure of material may be associated with a particular material and the relationship between these entities. The material ontology instance thus helps in providing data about materials using which materials suitable for a product may be identified, for example, by the system and a product engineer using the system. Further, providing relationship between the materials, the material properties, and the internal structure of material may help in identifying compositions and internal structures.

Product and process ontology instance includes data related to various products that may be manufactured using the materials and various processing techniques that may be carried out for manufacturing of the material and the product. Product data may include product related information, such as geometry, weight, volume, area, and strength that may be useful for developing the product and also identifying materials and the process for manufacturing the product. Further, processing techniques may be classified into primary manufacturing techniques, shaping processes, fabrication processes, etc. Model ontology instance includes various simulation and approximation models on a variety of phenomena at different levels of precision that may be used for testing materials and products in simulated real time environments.

Based on the properties and the requirements of the products, suitable materials, i.e., materials meeting requirements of the products may be ascertained using material knowledge elements and the material ontology instance. For example, based on the product requirements, a set of material selection rules may be determined from the material knowledge elements for ascertaining a suitable steel material, such as a rod, or a sheet of a particular strength, grade, etc. Subsequently, the material may be processed using one or more processes determined using product and process knowledge elements and the process ontology instances. The product and process knowledge elements may include a set of rules or a decision tree using which the product and process ontology instance may be determined and used.

In yet another aspect, the system (100) may initially identify the requirements and desired properties of the product based on the received description of a plurality of unit manufacturing processes and process ontology instance and product and process knowledge elements. The system (100) may subsequently determine suitable materials, i.e., materials meeting requirements of the products using the material ontology instance and the product and process knowledge elements. Additionally, a regular update of the knowledge base also ensures that the system (100) has access to all types of material and processes available till data for developing a product, a manufacturing material, or a processing technique.

In the preferred embodiment, the learning module (112) of the system (100) is configured to learn a plurality of Bayesian network models for each of the plurality of unit manufacturing processes based on the created ontological description. It would be appreciated that the learned plurality of Bayesian network models are stored in the knowledge base (106). Each Bayesian network model for a corresponding unit manufacturing process, which may be unit operations in other larger processes, is learnt independently from data and stored in the knowledge base (106).

In a Bayesian network model a network construction component takes a list of variables as an input and influence relations among the list of variables. From the list of variables, the network construction component constructs a Bayesian network where edges represent the influence relations. The structure and parameters of the Bayesian network are learnt from a training component. The training component assumes a conditional linear Gaussian for example, Each continuous node of the Bayesian network has a mixture of Gaussians distribution, wherein, the mixture distribution has one component for each value of discrete parents, and wherein, each component of the mixture distribution is a Gaussian whose mean is a linear combination of the values taken by its parents. The training component applies maximum likelihood estimation algorithm on the data to estimate the coefficients in this linear function for each node. Variance of each node is learnt separately from the data.

In the preferred embodiment, the selection module (114) of the system (100) is configured to select two or more unit manufacturing processes of the plurality of unit manufacturing processes for the desired properties of a product.

In the preferred embodiment, the obtaining module (116) of the system (100) is configured to obtain the learned Bayesian network model corresponding to each of the selected two or more unit manufacturing processes from the knowledge base (106).

In the preferred embodiment, the validation module (118) of the system (100) is configured to validate compatibility among the obtained each of the Bayesian network model corresponding to each of the selected two or more unit manufacturing processes using a set of predefined rules.

It would be appreciated that the Bayesian network model corresponding to each of the selected two or more unit manufacturing processes are compatible if the output of first Bayesian network model is ontologically compatible to the input of the second Bayesian network model. This means the ontological type of the output variable of the first ontological network model is either be the same as that of the input variable to the second ontological network model or the output of first Bayesian network model is a specialization of the input to the second Bayesian network model. The Bayesian network models are compatible in such a case because the second ontological network model that can handle inputs from a certain set can definitely handle inputs from its subset only.

In the preferred embodiment, the generation module (120) of the system (100) is configured to generate a composite model using compatible Bayesian network model corresponding to each of the two or more selected unit manufacturing processes to predict the configuration of the plurality of unit manufacturing processes, wherein the composite model is sampled to infer configuration for desired properties of the product to be manufactured.

It is to be noted that when at least two Bayesian network models and a mapping between outputs of first Bayesian network model and inputs of the second Bayesian network model is completed, it generates a model named as a composite model. Wherein the composite model is created and probability distributions are copied from the original models.

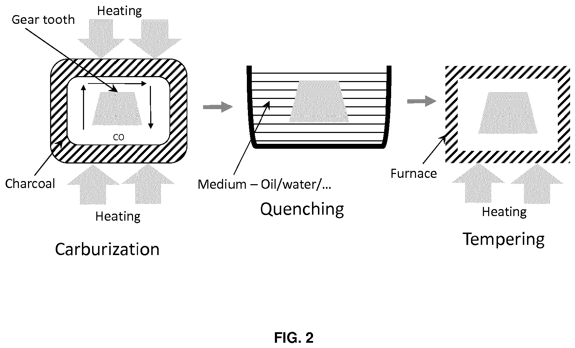

Referring FIG. 2, as an example, a typical gear manufacturing process consisting of the carburization-quenching-tempering as unit manufacturing processes is illustrated. In this process-chain, the initial material is first heated (carburization), then kept in a carbon-rich environment (diffusion), then rapidly cooled by quenching in a medium such as oil or water and finally heat-treated (tempering) again. The complete manufacturing process along with input and output at each unit manufacturing process is shown in FIG. 2. It would be appreciated that some of the outputs of carburization represent the state of the material after carburization, which is fed to the diffusion process, which is the next one in a predefined sequence. These outputs are carbon percentage at pitch and root, and depth of 85% Carbon at pitch and root. Hence, these output of the carburization act as inputs to the diffusion process.

Bayesian network models is selected for each unit manufacturing process as carburization, diffusion, quench, and temper and obtained them from knowledge repository since they are relevant in the given context of the gear manufacturing. A composite model for the gear manufacturing is generated by mapping the nodes of two Bayesian network models. It is to be noted that in each manufacturing process the chronological order of each unit manufacturing process must be predefined as per requirement of the product. Herein, the Bayesian network model of the carburization and the Bayesian network model of the diffusion must be compatible because they are in a predefined chronological order to achieve a gear. The output of the Bayesian network model of the carburization is mapped with the input of the Bayesian network model of the diffusion. It is found that the variables of CPC, CRC, CDPC, and CDRC in both the Bayesian network models map to the same ontological elements. Therefore, a composite model is generated with all variables of each Bayesian network model of each unit manufacturing process of the gear manufacturing.

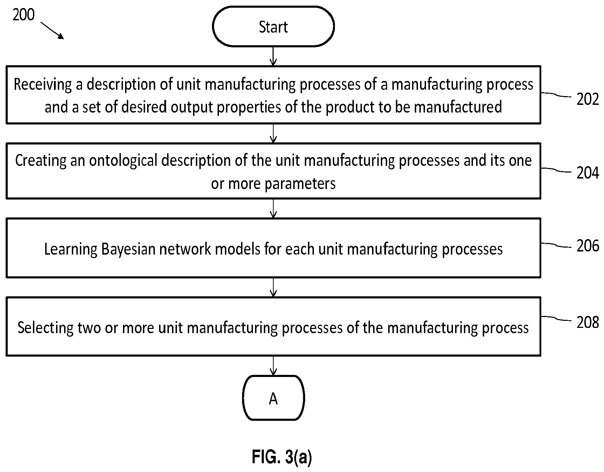

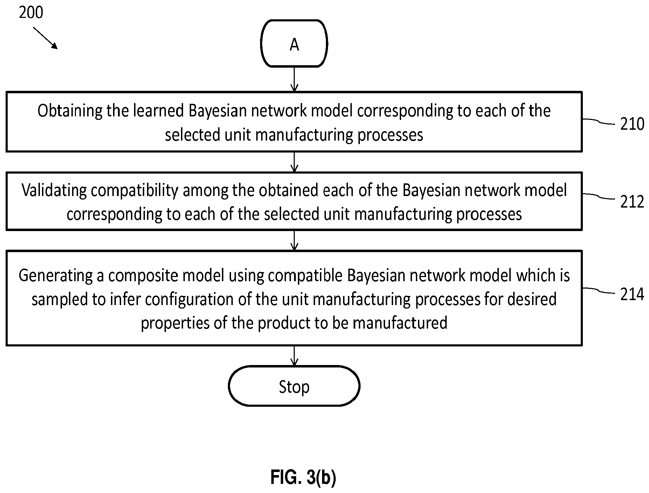

Referring FIG. 3(a) & 3(b), a method (200) to predict a configuration of a manufacturing process for desired properties of a product. The order in which the method is described is not intended to be construed as a limitation, and any number of the described method steps can be combined in any order to implement the method (200) or any alternative methods. Additionally, individual steps may be deleted from the method without departing from the spirit and scope of the subject matter described herein. Furthermore, the methods can be implemented in any suitable hardware, software, firmware, or combination thereof.

The method(s) may be described in the general context of computer executable instructions. Generally, computer executable instructions can include routines, programs, objects, components, data structures, procedures, modules, functions, etc. that perform particular functions or implement particular abstract data types. The method may also be practiced in a distributed computing environment where functions are performed by remote processing devices that are linked through a communications network. In a distributed computing environment, computer executable instructions may be located in both local and remote computer storage media, including memory storage devices.

A person skilled in the art will readily recognize that steps of the methods can be performed by programmed computers. Herein, some embodiments are also intended to cover program storage devices, for example, digital data storage media, which are machine or computer readable and encode machine-executable or computer-executable programs of instructions, where said instructions perform some or all of the steps of the described method. The program storage devices may be, for example, digital memories, magnetic storage media, such as a magnetic disks and magnetic tapes, hard drives, or optically readable digital data storage media. The embodiments are also intended to cover both communication network and communication devices configured to perform said steps of the exemplary methods.

Initially, at step (202), a description of a plurality of unit manufacturing processes are received at a receiving module (108) of the system (100). Further herein, a set of desired output properties of the product to be manufactured are also received at a receiving module (100) of the system (100).

In the preferred embodiment, at step (204), an ontological description of each of the plurality of unit manufacturing processes and its one or more parameters is created at a description module (108) of the system (100).

In the preferred embodiment, at step (206), a plurality of Bayesian network models for each of the plurality of unit manufacturing processes are learned at a learning module (112) of the system (100) and the learned plurality of Bayesian network models are stored in a knowledge base.

In the preferred embodiment, at step (208), selecting two or more unit manufacturing processes of the plurality of unit manufacturing processes at a selection module (114) of the system (100).

In the preferred embodiment, at step (210), the learned Bayesian network model is obtained at an obtaining module (116) of the system (100) corresponding to each of the selected two or more unit manufacturing processes from the knowledge base.

In the preferred embodiment, at the step (212), compatibility among the obtained each of the Bayesian network model corresponding to each of the selected two or more unit manufacturing processes is validated at a validation module (118) of the system (100) using a set of predefined rules.

Finally, at the step (214), a composite model is generated at a generation module (120) of the system (100) using compatible Bayesian network model corresponding to each of the two or more selected unit manufacturing processes to predict the configuration of the plurality of unit manufacturing processes. Whenever, the composite model is sampled, it infers the configuration of the plurality of unit manufacturing processes for the desired properties of the product to be manufactured.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein addresses unresolved problem of prediction of outputs/properties given the processing parameters (forward prediction problem) and prediction of inputs/process parameters required to achieve desired outputs/properties of a product. Moreover, the embodiments herein further provides a system and method to predict a configuration of a manufacturing process for desired properties of the product. Further herein, the system is configured for an inverse inference of a chain of manufacturing process to predict the configuration of the chain of the manufacturing processes for the desired properties of the product. A variant of the conditional Linear Gaussian Bayesian network to be used. As all the variables (process parameters and properties) being modeled are continuous variables, a Bayesian network is needed for continuous variables. Further, the system comprises a model capable of representing non-linear relationships and the model is capable of learning piecewise linear approximations.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope and spirit of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope being indicated by the following claims.

## Claims

1. A system (100) configured for an inverse inference of a chain of a manufacturing process to predict a configuration of the manufacturing process for desired properties of a product, the system (100) comprising:
at least one memory (102) storing a plurality of instructions; one or more hardware processors (104) communicatively coupled with the at least one memory (102), wherein the one or more hardware processors (104) are configured to execute one or more modules;
a receiving module (108) configured to receive a description of a plurality of unit manufacturing processes of the manufacturing process and a set of desired output properties from the manufacturing process, wherein the plurality of unit manufacturing processes are in a predefined chain;
a description module (110) configured to create an ontological description of the plurality of unit manufacturing processes and its one or more parameters;
a learning module (112) configured to learn a plurality of Bayesian network models for each of the plurality of unit manufacturing processes, wherein the learned plurality of Bayesian network models are stored in a knowledge repository;
a selection module (114) configured to select two or more unit manufacturing processes of the plurality of unit manufacturing processes;
an obtaining module (116) configured to obtain the learned Bayesian network model corresponding to each of the selected two or more unit manufacturing processes from the knowledge repository;
a validation module (118) configured to validate compatibility among the obtained each of the Bayesian network model corresponding to each of the selected two or more unit manufacturing processes using a set of predefined rules, wherein the Bayesian network model corresponding to each of the selected two or more unit manufacturing processes are compatible if the output of first Bayesian network model is ontologically compatible to the input of the second Bayesian network model, wherein the ontological type of the output variable of the first ontological network model is either the same as that of the input variable to the second ontological network model or the output of first Bayesian network model is a specialization of the input to the second Bayesian network model; and
a generation module (120) configured to generate a composite model using compatible Bayesian network model corresponding to each of the two or more selected unit manufacturing processes to predict the configuration of the plurality of unit manufacturing processes, wherein the composite model is sampled to infer configuration for desired properties of the product to be manufactured, and wherein the generated composite model is a Bayesian network model for the predefined chain obtained by appending successive Bayesian network model of each unit manufacturing process of the plurality of unit manufacturing processes.

2. The system (100) according to claim 1, wherein the ontology description includes semantic description for each of the plurality of unit manufacturing processes and its corresponding parameters.

3. The system (100) according to claim 1, wherein the plurality of unit manufacturing processes include carburization, quenching and tempering.

4. The system (100) according to claim 1, wherein the output of the first unit manufacturing process of the predefined chain is the input to the second unit manufacturing process of the predefined chain.

5. A processor-implemented method (200) for an inverse inference of a chain of a manufacturing process to predict a configuration of the manufacturing process for desired properties of a product, the method comprising:
receiving, via one or more hardware processors, a description of a plurality of unit manufacturing processes of the manufacturing process and a set of desired output properties from the manufacturing process, wherein the plurality of unit manufacturing processes are in a predefined chain;
creating, via one or more hardware processors, an ontological description of the plurality of unit manufacturing processes and its one or more parameters;
learning, via one or more hardware processors, a plurality of Bayesian network models for each of the plurality of unit manufacturing processes, wherein the learned plurality of Bayesian network models are stored in a knowledge repository;
selecting, via one or more hardware processors, two or more unit manufacturing processes of the plurality of unit manufacturing processes;
obtaining, via one or more hardware processors, the learned Bayesian network model corresponding to each of the selected two or more unit manufacturing processes from the knowledge repository;
validating, via one or more hardware processors, compatibility among the obtained each of the Bayesian network model corresponding to each of the selected two or more unit manufacturing processes using a set of predefined rules, wherein the Bayesian network model corresponding to each of the selected two or more unit manufacturing processes are compatible if the output of first Bayesian network model is ontologically compatible to the input of the second Bayesian network model, wherein the ontological type of the output variable of the first ontological network model is either the same as that of the input variable to the second ontological network model or the output of first Bayesian network model is a specialization of the input to the second Bayesian network model; and
generating, via one or more hardware processors, a composite model using compatible Bayesian network model corresponding to each of the two or more selected unit manufacturing processes to predict the configuration of the plurality of unit manufacturing processes, wherein the composite model is sampled to infer configuration for desired properties of the product to be manufactured, and wherein the generated composite model is a Bayesian network model for the predefined chain obtained by appending successive Bayesian network model of each unit manufacturing process of the plurality of unit manufacturing processes.

6. The method (200) according to claim 5, wherein the ontology description includes semantic description for each of the plurality of unit manufacturing processes and its corresponding parameters.

7. The method (200) according to claim 5, wherein the plurality of unit manufacturing processes include carburization, quenching and tempering.

8. The method (200) according to claim 5, wherein the output of the first unit manufacturing process of the predefined chain is the input to the second unit manufacturing process of the predefined chain.

## Patentansprüche

1. System (100), das für eine inverse Ableitung einer Kette eines Herstellungsprozesses konfiguriert ist, um eine Konfiguration des Herstellungsprozesses für gewünschte Eigenschaften eines Produkts vorherzusagen, wobei das System (100) umfasst:
mindestens einen Speicher (102), der eine Mehrzahl von Anweisungen speichert; einen oder mehrere Hardwareprozessoren (104), die kommunikativ mit dem mindestens einen Speicher (102) gekoppelt sind, wobei der eine oder die mehreren Hardwareprozessoren (104) konfiguriert sind, um ein oder mehrere Module auszuführen;
ein Empfangsmodul (108), das konfiguriert ist, um eine Beschreibung einer Mehrzahl von Einheitsherstellungsprozessen des Herstellungsprozesses und einen Satz von gewünschten Ausgabeeigenschaften aus dem Herstellungsprozess zu empfangen, wobei die Mehrzahl von Einheitsherstellungsprozessen in einer vordefinierten Kette ist;
ein Beschreibungsmodul (110), das konfiguriert ist, um eine ontologische Beschreibung der Mehrzahl von Einheitsherstellungsprozessen und ihrer einen oder mehreren Parameter zu erstellen;
ein Lernmodul (112), das konfiguriert ist, um eine Mehrzahl von Bayesschen Netzwerkmodellen für jeden der Mehrzahl von Einheitsherstellungsprozessen zu lernen, wobei die gelernte Mehrzahl von Bayesschen Netzwerkmodellen in einem Wissensspeicher gespeichert ist;
ein Auswahlmodul (114), das konfiguriert ist, um zwei oder mehr Einheitsherstellungsprozesse der Mehrzahl von Einheitsherstellungsprozessen auszuwählen;
ein Erhaltungsmodul (116), das konfiguriert ist, um das gelernte Bayessche Netzwerkmodell, das jedem der ausgewählten zwei oder mehr Einheitsherstellungsprozesse entspricht, aus dem Wissensspeicher zu erhalten;
ein Validierungsmodul (118), das konfiguriert ist, um die Kompatibilität zwischen dem erhaltenen jeden Bayesschen Netzwerkmodell, das jedem der ausgewählten zwei oder mehr Einheitsherstellungsprozesse entspricht, unter Verwendung eines Satzes von vordefinierten Regeln zu validieren, wobei das Bayessche Netzwerkmodell, das jedem der ausgewählten zwei oder mehr Einheitsherstellungsprozesse entspricht, kompatibel ist, wenn die Ausgabe des ersten Bayesschen Netzwerkmodells ontologisch mit der Eingabe des zweiten Bayesschen Netzwerkmodells kompatibel ist, wobei der ontologische Typ der Ausgabevariablen des ersten ontologischen Netzwerkmodells entweder der gleiche wie der der Eingabevariablen in das zweite ontologische Netzwerkmodell ist oder die Ausgabe des ersten Bayesschen Netzwerkmodells eine Spezialisierung der Eingabe in das zweite Bayessche Netzwerkmodell ist; und
ein Erzeugungsmodul (120), das konfiguriert ist, um ein zusammengesetztes Modell unter Verwendung eines kompatiblen Bayesschen Netzwerkmodells, das jedem der zwei oder mehr ausgewählten Einheitsherstellungsprozesse entspricht, zu erzeugen, um die Konfiguration der Mehrzahl von Einheitsherstellungsprozessen vorherzusagen, wobei das zusammengesetzte Modell abgetastet wird, um die Konfiguration für gewünschte Eigenschaften des herzustellenden Produkts abzuleiten, und wobei das erzeugte zusammengesetzte Modell ein Bayessches Netzwerkmodell für die vordefinierte Kette ist, das durch Anhängen eines aufeinanderfolgenden Bayesschen Netzwerkmodells jedes Einheitsherstellungsprozesses der Mehrzahl von Einheitsherstellungsprozessen erhalten wird.

2. System (100) nach Anspruch 1, wobei die ontologische Beschreibung eine semantische Beschreibung für jeden der Mehrzahl von Einheitsherstellungsprozessen und ihrer entsprechenden Parameter beinhaltet.

3. System (100) nach Anspruch 1, wobei die Mehrzahl von Einheitsherstellungsprozessen Aufkohlung, Abschrecken und Tempern beinhaltet.

4. System (100) nach Anspruch 1, wobei die Ausgabe des ersten Einheitsherstellungsprozesses der vordefinierten Kette die Eingabe in den zweiten Einheitsherstellungsprozess der vordefinierten Kette ist.

5. Prozessorimplementiertes Verfahren (200) für eine inverse Ableitung einer Kette eines Herstellungsprozesses, um eine Konfiguration des Herstellungsprozesses für gewünschte Eigenschaften eines Produkts vorherzusagen, wobei das Verfahren umfasst:
Empfangen, über einen oder mehrere Hardwareprozessoren, einer Beschreibung einer Mehrzahl von Einheitsherstellungsprozessen des Herstellungsprozesses und eines Satzes von gewünschten Ausgabeeigenschaften aus dem Herstellungsprozess, wobei die Mehrzahl von Einheitsherstellungsprozessen in einer vordefinierten Kette ist;
Erstellen, über einen oder mehrere Hardwareprozessoren, einer ontologischen Beschreibung der Mehrzahl von Einheitsherstellungsprozessen und ihrer einen oder mehreren Parameter;
Lernen, über einen oder mehrere Hardwareprozessoren, einer Mehrzahl von Bayesschen Netzwerkmodellen für jeden der Mehrzahl von Einheitsherstellungsprozessen, wobei die gelernte Mehrzahl von Bayesschen Netzwerkmodellen in einem Wissensspeicher gespeichert ist;
Auswählen, über einen oder mehrere Hardwareprozessoren, von zwei oder mehr Einheitsherstellungsprozessen der Mehrzahl von Einheitsherstellungsprozessen;
Erhalten, über einen oder mehrere Hardwareprozessoren, des gelernten Bayesschen Netzwerkmodells, das jedem der ausgewählten zwei oder mehr Einheitsherstellungsprozesse entspricht, aus dem Wissensspeicher;
Validieren, über einen oder mehrere Hardwareprozessoren, der Kompatibilität zwischen dem erhaltenen jeden Bayesschen Netzwerkmodell, das jedem der ausgewählten zwei oder mehr Einheitsherstellungsprozesse entspricht, unter Verwendung eines Satzes von vordefinierten Regeln, wobei das Bayessche Netzwerkmodell, das jedem der ausgewählten zwei oder mehr Einheitsherstellungsprozesse entspricht, kompatibel ist, wenn die Ausgabe des ersten Bayesschen Netzwerkmodells ontologisch mit der Eingabe des zweiten Bayesschen Netzwerkmodells kompatibel ist, wobei der ontologische Typ der Ausgabevariablen des ersten ontologischen Netzwerkmodells entweder der gleiche wie der der Eingabevariablen in das zweite ontologische Netzwerkmodell ist oder die Ausgabe des ersten Bayesschen Netzwerkmodells eine Spezialisierung der Eingabe in das zweite Bayessche Netzwerkmodell ist; und
Erzeugen, über einen oder mehrere Hardwareprozessoren, eines zusammengesetzten Modells unter Verwendung eines kompatiblen Bayesschen Netzwerkmodells, das jedem der zwei oder mehr ausgewählten Einheitsherstellungsprozesse entspricht, um die Konfiguration der Mehrzahl von Einheitsherstellungsprozessen vorherzusagen, wobei das zusammengesetzte Modell abgetastet wird, um die Konfiguration für gewünschte Eigenschaften des herzustellenden Produkts abzuleiten, und wobei das erzeugte zusammengesetzte Modell ein Bayessches Netzwerkmodell für die vordefinierte Kette ist, das durch Anhängen eines aufeinanderfolgenden Bayesschen Netzwerkmodells jedes Einheitsherstellungsprozesses der Mehrzahl von Einheitsherstellungsprozessen erhalten wird.

6. Verfahren (200) nach Anspruch 5, wobei die ontologische Beschreibung eine semantische Beschreibung für jeden der Mehrzahl von Einheitsherstellungsprozessen und ihrer entsprechenden Parameter beinhaltet.

7. Verfahren (200) nach Anspruch 5, wobei die Mehrzahl von Einheitsherstellungsprozessen Aufkohlung, Abschrecken und Tempern beinhaltet.

8. Verfahren (200) nach Anspruch 5, wobei die Ausgabe des ersten Einheitsherstellungsprozesses der vordefinierten Kette die Eingabe in den zweiten Einheitsherstellungsprozess der vordefinierten Kette ist.

## Revendications

1. Système (100) configuré de manière à permettre à une inférence inverse d'une chaîne de processus de fabrication de prédire une configuration du processus de fabrication pour des propriétés souhaitées d'un produit, le système (100) comprenant :
au moins une mémoire (102) stockant une pluralité d'instructions ; un ou plusieurs processeurs matériels (104) couplés en communication avec ladite au moins une mémoire (102), dans lequel ledit un ou lesdits plusieurs processeurs matériels (104) sont configurés de manière à exécuter un ou plusieurs modules ;
un module de réception (108) configuré de manière à recevoir une description d'une pluralité de processus de fabrication unitaire du processus de fabrication et un ensemble de propriétés de sortie souhaitées, en provenance du processus de fabrication, dans lequel les processus de la pluralité de processus de fabrication unitaire se situent dans une chaîne prédéfinie ;
un module de description (110) configuré de manière à créer une description ontologique de la pluralité de processus de fabrication unitaire et d'un ou plusieurs paramètres desdits processus ;
un module d'apprentissage (112) configuré de manière à apprendre une pluralité de modèles de réseaux bayésiens pour chaque processus de la pluralité de processus de fabrication unitaire, dans lequel les modèles de la pluralité de modèles de réseaux bayésiens appris sont stockés dans un référentiel de connaissances ;
un module de sélection (114) configuré de manière à sélectionner deux processus de fabrication unitaire ou plus parmi la pluralité de processus de fabrication unitaire ;
un module d'obtention (116) configuré de manière à obtenir le modèle de réseau bayésien appris correspondant à chaque processus des deux processus de fabrication unitaire ou plus sélectionnés à partir du référentiel de connaissances ;
un module de validation (118) configuré de manière à valider une compatibilité entre le modèle de réseau bayésien obtenu correspondant à chacun des deux processus de fabrication unitaire ou plus sélectionnés, en utilisant un ensemble de règles prédéfinies, dans lequel le modèle de réseau bayésien correspondant à chacun des deux processus de fabrication unitaire ou plus sélectionnés est compatible si la sortie du premier modèle de réseau bayésien est ontologiquement compatible avec l'entrée du second modèle de réseau bayésien, dans lequel le type ontologique de la variable de sortie du premier modèle de réseau ontologique est le même que celui de la variable d'entrée au niveau du second modèle de réseau ontologique, ou la sortie du premier modèle de réseau bayésien est une spécialisation de l'entrée au niveau du second modèle de réseau bayésien ; et
un module de génération (120) configuré de manière à générer un modèle composite en utilisant un modèle de réseau bayésien compatible correspondant à chacun des deux processus de fabrication unitaire ou plus sélectionnés, en vue de prédire la configuration de la pluralité de processus de fabrication unitaire, dans lequel le modèle composite est échantillonné pour inférer une configuration pour des propriétés souhaitées du produit à fabriquer, et dans lequel le modèle composite généré est un modèle de réseau bayésien pour la chaîne prédéfinie, obtenu en annexant un modèle de réseau bayésien successif de chaque processus de fabrication unitaire de la pluralité de processus de fabrication unitaire.

2. Système (100) selon la revendication 1, dans lequel la description ontologique inclut une description sémantique pour chaque processus de la pluralité de processus de fabrication unitaire et ses paramètres correspondants.

3. Système (100) selon la revendication 1, dans lequel les processus de la pluralité de processus de fabrication unitaire incluent des processus de carburation, de trempage et de revenu.

4. Système (100) selon la revendication 1, dans lequel la sortie du premier processus de fabrication unitaire de la chaîne prédéfinie est l'entrée au niveau du second processus de fabrication unitaire de la chaîne prédéfinie.

5. Procédé mis en oeuvre par processeur (200) pour permettre à une inférence inverse d'une chaîne de processus de fabrication de prédire une configuration du processus de fabrication pour des propriétés souhaitées d'un produit, le procédé comprenant les étapes ci-dessous consistant à :
recevoir, par l'intermédiaire d'un ou plusieurs processeurs matériels, une description d'une pluralité de processus de fabrication unitaire du processus de fabrication et un ensemble de propriétés de sortie souhaitées, en provenance du processus de fabrication, dans lequel les processus de la pluralité de processus de fabrication unitaire se situent dans une chaîne prédéfinie ;
créer, par l'intermédiaire d'un ou plusieurs processeurs matériels, une description ontologique de la pluralité de processus de fabrication unitaire et d'un ou plusieurs paramètres desdits processus ;
apprendre, par l'intermédiaire d'un ou plusieurs processeurs matériels, une pluralité de modèles de réseaux bayésiens pour chaque processus de la pluralité de processus de fabrication unitaire, dans lequel les modèles de la pluralité de modèles de réseaux bayésiens appris sont stockés dans un référentiel de connaissances ;
sélectionner, par l'intermédiaire d'un ou plusieurs processeurs matériels, deux processus de fabrication unitaire ou plus parmi la pluralité de processus de fabrication unitaire ;
obtenir, par l'intermédiaire d'un ou plusieurs processeurs matériels, le modèle de réseau bayésien appris correspondant à chaque processus des deux processus de fabrication unitaire ou plus sélectionnés à partir du référentiel de connaissances ;
valider, par l'intermédiaire d'un ou plusieurs processeurs matériels, une compatibilité entre le modèle de réseau bayésien obtenu correspondant à chacun des deux processus de fabrication unitaire ou plus sélectionnés, en utilisant un ensemble de règles prédéfinies, dans lequel le modèle de réseau bayésien correspondant à chacun des deux processus de fabrication unitaire ou plus sélectionnés est compatible si la sortie du premier modèle de réseau bayésien est ontologiquement compatible avec l'entrée du second modèle de réseau bayésien, dans lequel le type ontologique de la variable de sortie du premier modèle de réseau ontologique est le même que celui de la variable d'entrée au niveau du second modèle de réseau ontologique, ou la sortie du premier modèle de réseau bayésien est une spécialisation de l'entrée au niveau du second modèle de réseau bayésien ; et
générer, par l'intermédiaire d'un ou plusieurs processeurs matériels, un modèle composite en utilisant un modèle de réseau bayésien compatible correspondant à chacun des deux processus de fabrication unitaire ou plus sélectionnés, en vue de prédire la configuration de la pluralité de processus de fabrication unitaire, dans lequel le modèle composite est échantillonné pour inférer une configuration pour des propriétés souhaitées du produit à fabriquer, et dans lequel le modèle composite généré est un modèle de réseau bayésien pour la chaîne prédéfinie, obtenu en annexant un modèle de réseau bayésien successif de chaque processus de fabrication unitaire de la pluralité de processus de fabrication unitaire.

6. Procédé (200) selon la revendication 5, dans lequel la description ontologique inclut une description sémantique pour chaque processus de la pluralité de processus de fabrication unitaire et ses paramètres correspondants.

7. Procédé (200) selon la revendication 5, dans lequel les processus de la pluralité de processus de fabrication unitaire incluent des processus de carburation, de trempage et de revenu.

8. Procédé (200) selon la revendication 5, dans lequel la sortie du premier processus de fabrication unitaire de la chaîne prédéfinie est l'entrée au niveau du second processus de fabrication unitaire de la chaîne prédéfinie.
